(19) Europäisches Patentamt
European Patent Office
Office européen des brevets

(11) EP 1 568 414 B1

(12) EUROPEAN PATENT SPECIFICATION

(45) Date of publication and mention of the grant of the patent:
**05.12.2007 Bulletin 2007/49**

(51) Int Cl.:
***B01J 27/26*** (2006.01) ***C08G 59/68*** (2006.01)

(21) Application number: **04380044.0**

(22) Date of filing: **27.02.2004**

(54) **Double metal cyanide (DMC) catalysts with crown ethers, process to produce them and applications**

Doppelmetallcyanidkatalysatoren (DMC) mit Kronenethern, Prozess zu ihrer Herstellung und Verwendungen

Catalyseur à base de cyanure métallique double avec des ethers couronnes, leurs preparations et utilisations

(84) Designated Contracting States:
**AT BE BG CH CY CZ DE DK EE ES FI FR GB GR HU IE IT LI LU MC NL PT RO SE SI SK TR**

(43) Date of publication of application:
**31.08.2005 Bulletin 2005/35**

(73) Proprietor: **REPSOL QUIMICA S.A.**
**E-28046 Madrid (ES)**

(72) Inventors:
- **Malaga Mellado, Mariano**
  **28045 Madrid (ES)**
- **Blanco Gonzalez, Maria Dolores**
  **28921 Alcorcon, Madrid (ES)**

(74) Representative: **Garcia-Cabrerizo y del Santo, Pedro Maria**
**Oficina Garcia Cabrerizo, S.L.,**
**Vitruvio, 23**
**28006 Madrid (ES)**

(56) References cited:
**US-A1- 2003 050 186** **US-B1- 6 204 357**

Remarks:
The file contains technical information submitted after the application was filed and not included in this specification

EP 1 568 414 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### FIELD OF THE INVENTION

This invention relates to new double metal cyanide (DMC) catalysts, to a process to produce them and their applications, e.g. to produce polyether polyols.

### BACKGROUND OF THE INVENTION

DMC catalysts are quite well-known in epoxide polymerization. These catalysts have high catalytic activity and are especially useful in the production of polyether polyols with reduced unsaturation, a very narrow distribution of molecular weights and, consequently, low polydispersity.

DMC catalysts were discovered almost 40 years ago by researchers from "General Tire and Rubber Co." (US 3,404,109 and US 3,941,849). DMC technology has been revised since 1983 and improved by different companies such as, for example, Shell (US 4,472,560 and US 4,477,589); Asahi Glass (JP 3002136 and EP 1288244) and ARCO (US 5,158,922; US 5,482,908; US 5,693,584). DMC catalysts are usually produced by the treatment of aqueous solutions of metal salts with aqueous solutions of metal cyanide salts in the presence of organic ligands with low molecular weight, e.g. ethers. In a typical preparation of these catalysts, an aqueous solution of zinc chloride (in excess) is mixed with an aqueous solution of potassium hexacyanocobaltate and with dimethoxyethane (diglyme) to form a suspension. After the separation of the solid catalyst by filtering and washing it with an aqueous solution of diglyme, active DMC catalysts are produced with general formula Zn3[Co(CN)6]2.xZnCl2.yH2O.zdiglyme (EP 700949).

EP 700949, WO 97/40086 and WO 98/16310 disclose improved DMC catalysts which use polyether polyols or functionalized polymers in addition to the double metal cyanide and the organic ligand. These improved DMC catalysts have high catalytic activity and permit the production of polyether polyols with low concentrations of catalytic residues, in the order of 20-25 ppm (WO 98/16310, Table 1).

WO 99/19063 discloses crystalline double metal cyanides useful as high activity catalysts to produce polyether polyols. The patent US 5,844,070 discloses a rapid activation process for DMC catalysts. The patent US 6,204,357 claims the use of cyclodextrins to improve catalyst activity.

### SUMMARY OF THE INVENTION

The present invention discloses a new family of DMC catalysts that comprise a new organic ligand (complexing compound), specifically a crown ether. These DMC catalysts are simple to synthesize and show high activity in polyether polyol synthesis.

Surprisingly, it has been discovered that DMC catalysts that contain one or more crown ethers as additional organic ligand(s) show high catalytic activity in the production of polyether polyols by the addition of alkylene oxides to initiators with active hydrogens

Therefore, in one aspect, the invention is related to a DMC catalyst that comprises, at least, one ligand consisting of a crown ether. Said DMC catalysts have been structurally analysed using X-ray diffraction (XRD) and their catalytic activity has been tested observing that they are very effective in polyether polyol synthesis.

In another aspect, the invention is related to a process to produce said DMC catalyst provided by this invention.

In another aspect, the invention is related to a process to produce polyether polyols that comprises the addition of an alkylene oxide to an initiator with active hydrogens in the presence of a DMC catalyst provided by this invention.

### BRIEF DESCRIPTION OF THE FIGURES

Figure 1 is a drawing which represents the quantities of propylene oxide (PO) (grams) consumed against time (minutes) for the catalyst of Example 3 (invention) compared with the reference catalyst (Example 6 comparative).

### DETAILED DESCRIPTION OF THE INVENTION

One aspect of the present invention relates to a double metal cyanide (DMC) catalyst with a partially crystalline structure with approximate parameters of a= 12.17, b= 6.78, c=7.85, β= 97.1°, V=643 Å$^3$ which comprises:

(1) one or more double metal cyanides;
(2) one or more organic ligands;

(3) water occluded in the partially crystalline part of the catalyst; and
(4) one or more crown ether ligand,

with the condition that the organic ligand (2) is not a crown ether ligand (4).

The double metal cyanides (1) contained in the DMC catalysts of the present invention comprise the reaction product of water-soluble metal salts and water-soluble metal cyanide salts.

The water-soluble metal salts correspond to the general formula (I)

$$M(A)n$$

where
M represents a cation selected from the group formed by Zn(II), Ni(II), Mn(II), Fe(II), Co(II), Pb(II), Mo(IV), Al(III), V(IV), Sr(II) and Cu(II), preferably, selected from the group formed by Zn(II), Ni(II), Mn(II), Fe(II) and Co(II);
A represents an anion selected from the group formed by halides, sulphates carbonates, vanadates, nitrates, hydroxides and their mixtures; and
n is 1, 2 or 3, and satisfies the valence state of M.

The water-soluble metal cyanide salts correspond to the general formula (II)

$$Dx[Ey(CN)_6]$$

where
D represents a cation of a metal selected from the group formed by alkaline and alkaline earth metals;
E represents a cation selected from the group formed by Co(II), Co (III), Fe(II), Fe(III), Mn(II), Mn(III), Cr(II) and Cr(III), preferably, a cation selected from the group formed by Co(II), Fe(II), Ni(II), Co(III) and Fe(III); and
The x and y sub-indexes correspond to the values that electrically adjust the metal cyanide salt.

Illustrative examples of soluble metal cyanide salts that respond to general formula (II) include, amongst others, potassium hexacyanocobaltate (III), potassium hexacyanoferrate (III, calcium hexacyanocobaltate (III), etc.

The organic ligand (complexing compound) (2) contained in the DMC catalysts of the present invention can be any of those typically disclosed in the state of the art, advantageously water-soluble. In an particular embodiment, said organic ligand (2) is an organic compound, preferably water-soluble, selected from the group formed by an ether, an alcohol, an aldehyde, an ester and their mixtures. Illustrative examples of said organic ligands include ethers such as diethyl ether, 1-ethoxy pentane, butyl ether, ethyl propyl ether, methyl propyl ether, etc., alcohols, such as methanol, ethanol, propanol, isopropanol, butanol, octanol, etc., aldehydes, such as formaldehyde, acetaldehyde, butyraldehyde, benzaldehyde, etc., esters, such as amyl formiate, ethyl formiate, ethyl acetate, methyl acetate, etc., and mixtures of said compounds.

The water (3) present in the DMC catalyst of the invention is usually occluded in the crystalline structure of the DMC catalyst and, if it was completely eliminated, would appreciably reduce the catalytic capacity thereof.

The DMC catalyst of the invention further contains one or more crown ether ligands (4). Crown ethers are compounds with large rings which contain several oxygen atoms, typically in a regular structure. Said compounds have are capable of forming complexes with positive ions, generally metal ions, ammonium ions or substituted ammonium ions. The crown ether performs the function of host and the ion that of guest. In addition to its use in the separation of cation mixtures, crown ethers have found multiple applications in organic synthesis; thus, for example, a salt such as KCN is transformed by dicyclohexane 18-crown-6 in a new salt whose cation responds to the formula:

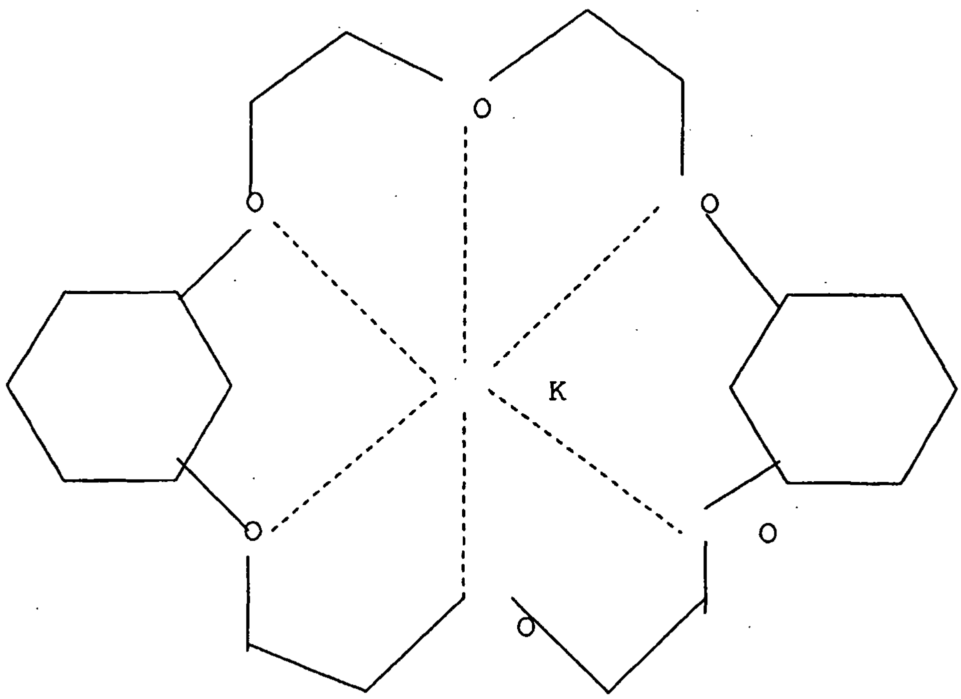

wherein the anion is the same ($CN^-$), but whose cation is of a much more voluminous type, with the positive charge distributed in a large volume, and, therefore, much less concentrated. This large cation is much less water-soluble and much more attracted by organic solvents. In this way, the KCN, insoluble in the majority of organic solvents, is soluble in the form of cryptate in the majority thereof. Furthermore, the crown ethers are also used to make neutral molecules complex, such as amines and phenols and, even anions. Other notable applications of crown ethers include nitrile purification; phenol protection for flavone synthesis, the selective rupture of esters; the reduction of diazonium salts; peptide synthesis; selective ester hydrolysis; etc. Now it has been discovered that crown ethers increase the catalytic activity of the DMC catalysts of the invention.

Practically any crown ether can be present as a ligand in the DMC catalysts of the invention; nevertheless, in a particular embodiment, said crown ether (4) that can be present as a ligand in the DMC catalyst of the invention is selected from the group formed by benzo-15-crown-5, benzo-18-crown-6, 4-tert-butylbenzo-15-crown-5, 4-tert-butylcylohexane-15-crown-5, 12-crown-4, 18-crown-6, cyclo-hexane-15-crown-5, dibenzo-18-crown-6, dibenzo-21-crown-7, dibenzo-24-crown-8, dibenzo-30-crown-10,4,4'(5')-ditert-butyldibenzo-18-crown-6, 4,4',(5')-ditert-butyldibenzo-24-crown-8, 4,4'(5')-ditert-butyldicyclohexane-18-crown-6, 2,3-naphtho-15-crown-5, and their mixtures.

A characteristic of the DMC catalysts of the invention lies in that the ligands (2) (organic ligand) and (4) (crown ether ligand) are different.

In a particular embodiment, the DMC catalyst of the invention is composed of a double metal cyanide (1), an organic ligand (2) and a crown ether ligand (4), in addition to water. In another particular embodiment, the DMC catalyst of the invention comprises two or more different double metal cyanides (1), or two or more different organic ligands (2), or two or more different crown ether ligands (4), in addition to water.

The DMC catalysts of the invention can be structurally analysed by X-ray diffraction (XRD). In a particular embodiment, the invention provides a DMC catalyst whose most significant peaks in the XRD profile are (in space d, in Å): 3.76; 4.98 and 6.06 approximately.

In a particular embodiment, the DMC catalyst of the present invention contains between 20% and 97% by weight of double metal cyanide (1), between 1% and 35% by weight of organic ligand (2), between 1% and 15% by weight of water (3), and between 1% and 30% by weight of crown ether ligand (4). In another particular embodiment, the DMC catalyst of the present invention contains between 45% and 97% by weight of double metal cyanide (1), between 1% and 25% by weight of organic ligand (2), between 1% and 10% by weight of water (3), and between 1% and 20% by weight of crown ether ligand (4).

In another aspect, the invention relates to a process to produce the DMC catalyst of the invention which comprises the following steps:

a) pre-heating the mixture formed by the components (1), (2) and (3) at a temperature below 30°C
b) adding a solution of the component (4) to the mixture at the same temperature below 30°C

The catalysts of the invention can be used to produce polyether polyols, e.g., low-unsaturation polyether polyols useful in the polyurethane industry. Therefore, in another aspect, the invention is related to a process to produce polyether polyols which comprise the addition of an alkylene oxide to an initiator with active hydrogens in the presence of a DMC catalyst of the invention. Practically any alkylene oxide and any initiator with active hydrogens can be used to produce polyether polyols in the presence of a DMC catalyst of the invention. By way of illustration, said alkylene oxide can be ethylene oxide, propylene oxide, butylene oxide, styrene oxide, octet oxide, etc., and said initiator with active hydrogens can be dipropylene glycol, polypropylene glycol (PPG), e.g. PPG with a molecular weight of 400, glycerine oxypropylenate, e.g. glycerine oxypropylenate with a molecular weight of 700, etc.

The following examples illustrate the nature of the invention and should not be taken as restrictive of its scope. Examples 1-5 illustrate the production of DMC catalysts of the invention, whilst Example 6 (comparative) illustrates the production of a DMC catalyst according to the state of the art. The structural characterization of said catalysts is set down in Example 7. Example 8 illustrates the catalytic activity of said catalysts in the synthesis of polyether polyols.

## EXAMPLE 1

Three solutions are prepared: one solution of 75 g of zinc chloride dissolved in 275 ml of water and 50 ml of tert-butyl alcohol (TBA); another solution of 7.5 g of potassium hexacyanocobaltate in 100 ml of water; and a third solution with 2.5 g of a crown ether (18-crown-6) dissolved in 50 ml of water.

The first solution is heated to a temperature equal to or lower than 30°C and, for 30 minutes, the potassium hexacyanocobaltate solution is added, stirring at 400 rpm (revolutions per minute). It is then left to post-react for another 30 minutes at the same temperature, and, finally, the third solution is added and it is stirred for 5 minutes in the same conditions. This solution is filtered and the solid is collected.

It is then first redissolved with 185 ml of a 70% TBA/$H_2O$ solution, for 30 minutes at the same temperature as in the previous phases and, then, a solution with 0.62 g crown ether dissolved in 10 ml of water is added, stirred for 5 minutes and filtered again.

The solid collected after the filtration is again redissolved in 185 ml of TBA for 30 minutes in identical temperature conditions. Finally, it is filtered and the resulting solid is dried in a vacuum stove at 60°C and 1,000 Pa (10 mbar).

## EXAMPLE 2

The process disclosed in Example 1 is followed, but using double the quantity of crown ether.

## EXAMPLE 3

The process disclosed in Example 1 is followed, but using triple the quantity of crown ether.

## EXAMPLE 4

The process disclosed in Example 1 is followed, but using 4 times the quantity of crown ether.

## EXAMPLE 5

The process disclosed in Example 1 is followed, but using 6 times the quantity of crown ether.

## EXAMPLE 6 (COMPARATIVE)

Example 6 was carried out according to Example 4 of the patent US 5,627,120. A 10g solution of zinc chloride in 15 ml of distilled water is added to a solution of 4g of potassium hexacyanocobaltate in 75 ml of distilled water with vigorous stirring (24,000 rpm), producing a suspension. Immediately afterwards, a mixture of 50 g of TBA and 50 g of distilled water is added to the suspension produced and is stirred vigorously (24,000 rpm) for 10 minutes. The solid formed is filtered and, them, it is stirred at 10,000 rpm for 10 minutes with 125 g of a mixture of TBA and distilled water, in a weight ratio of 70/30, and it is again filtered. The product is treated again at 10,000 rpm for 10 minutes with 125 g of TBA. After the filtration, the catalyst is dried until constant weight at 50°C at atmospheric pressure.

**EXAMPLE 7**

**Characterization of the catalysts**

7.1 X-Ray Diffraction (XRD)

Since the first DMC catalysts were synthesized, the difficulty in their structural characterization has always been recognized, partly due to the fact that they are composed of amorphous phases whose X-ray diffraction profiles could not be indexed.

To perform this X-ray diffraction study (XRD) of the DMC catalysts of Examples 1-6, a Philips X'Pert diffractometer with CuKα radiation (λ =1.54 Å) at 40 mV and 30 mA, and a PW3123/10 monochromator for Cu radiation, have been used.

The XRD data was taken from 5° to 90° 2θ with a gauge of 0.04° 2θ and a time of 2.35 seconds per passage.

The diffractograms produced have been interpreted based on an indexing of their peaks with the aim of identifying the crystalline phases present.

Table 1 shows the most intense peaks on the X-ray diffractograms.

**Table 1**

| **Crown ether (g)** | **Spacing in the range of 3.5 to 6.5 Å d(Å)** | | | | | | | |
|---|---|---|---|---|---|---|---|---|
| 2.5 | 3.764 | | | | 5.011 | | | 6.076 |
| 5 | 3.764 | | | | 5.062 | | | 6.128 |
| 7.5 | 3.749 | | | | 4.892 | | | 6.013 |
| 10 | 3.761 | | | | 4.973 | | | 6.018 |
| 15 | 3.757 | | | | 4.983 | | | 6.077 |
| Intensity related to the maximum | 100% | | | | Wide peak: 52% | | | 67% |
| **only TBA** | 3.769 | 4.266 | 4.419 | 4.769 | 4.899 | 5.129 | 5.658 | 6.11 |
| Intensity related to the maximum | 100% | 27% | 36% | 62% | 74% | 56% | 24% | 53% |

The diffractogram peaks of the DMC catalysts of the invention synthesized with crown ethers have great similarity. They are composed of a crystalline phase and an amorphous phase. The crystalline phase can be indexed as sole monoclinic phase with approximate parameters of:

$$a = 12.17,\ b = 6.78,\ c = 7.85,\ \beta = 97.1°,\ V = 643\ Å^3$$

The DMC catalyst synthesized only with TBA (without crown ether) also has a mixture of crystalline phases but they do not coincide with the monoclinic structure of those that contain crown ethers, their most significant peaks in the diffractogram are shown in Table 1.

In the literature, catalysts are disclosed whose XRD profile is (d-spacing, in Å): 5.75, 4.82 and 3.76 and that do not show signs corresponding to the highly crystalline phase of zinc hexacyanocobaltate at (d-spacing, in Å): 5.07; 3.59; 2.54 and 2.28.

The DMC catalysts synthesized with TBA and crown ethers as organic ligands do not have the XRD profile claimed in the patents of the literature, which indicates that the structure is different and this may be the explanation for its greater reactivity.

7.2 Thermogravimetric analysis (TGA)

Thermogravimetric analyses (TGA) have been performed on the DMC catalysts of Examples 1-5 with a Perkin-Elmer TGA-HT unit, in a $N_2$ atmosphere at 30 ml/min and at 25°C to 1,000°C at 10°C/min. The analyses have been focussed on the area of the ligands, the mass loss around 350°C is due to the crown ethers. The mass losses of crown ether in the thermogram are set down in Table 2.

**Table 2**

| Crown ether | 2.5 | 5 | 7.5 | 10 | 15 |
|---|---|---|---|---|---|
| % mass loss | 16.04% | 16.36% | 19.95% | 19.21% | 18.87% |

In said Table 2, it can be observed that the ligand incorporated in the DMC catalyst structure has an upper limit of 20%.

**EXAMPLE 8**

**Catalytic activity in polyether polyols synthesis**

The catalysts produced in Examples 1-6 have been tested in the propylene oxide (PO) polymerization reaction to synthesize a polyether polyol with a molecular weight of 2,000, according to the process described below.

In a 2-litre Büchi semi-batch reactor, load 200 g of a prepolymer with a molecular weight of 400, it is stirred and heated to 120°C in an inert atmosphere. It is made a vacuum to eliminate the humidity of the prepolymer for 90 minutes. Then, add 30 parts per million (ppm) of DMC catalyst and it is stirred for another 30 minutes. Next, add 60 g of PO to activate the catalyst. Wait until the pressure acquired sharply descends until the initial value (which will indicate that the catalyst has already been activated) and next proceed with the continual loading of the PO until reaching the desired molecular weight. The feeding of the PO is carried out at 120°C and without the pressure exceeding $1.47.10^5$ Pa (1.5 kg/$cm^2$) approximately. Once all the PO has been activated, it is left to post-react for 1 hour. Finally the residual monomers are eliminated in a vacuum.

The resulting polyol polyether is analysed to verify the influence on the different DMC catalysts in the quality thereof. As can be appreciated in Table 3, the characteristics of the polyether polyols produced are very homogenous and very similar to those of comparative Example 6, which indicates that the DMC catalysts provided by the present invention permit obtaining products with characters similar to those produced with processed disclosed in the state of the art.

**Table 3**

| Catalyst | Ligand/Crown-ether | Viscosity | Acidity | Unsaturation | $I_{OH}$ | M.wt | GPC | Disp |
|---|---|---|---|---|---|---|---|---|
| Example 6 | Only TBA | 368 | 0.015 | 0.007 | 55.1 | 2036 | 2018 | 1.16 |
| Example 1 | TBA + crown ether (2.5 g) | 381 | 0.013 | 0.008 | 56.7 | 1979 | 1999 | 1.14 |
| Example 2 | TBA + crown ether (5 g) | 377 | 0.013 | 0.007 | 56.2 | 1996 | 2077 | 1.15 |
| Example 3 | TBA + crown ether (7.5 g) | 383 | 0.008 | 0.007 | 56.4 | 1989 | 2100 | 1.18 |
| Example 4 | TBA + crown ether (10 g) | 375 | 0.01 | 0.007 | 53.7 | 2089 | 2025 | 1.14 |
| Example 5 | TBA + crown ether (15 g) | 373 | 0.009 | 0.008 | 53.6 | 2093 | 2029 | 1.11 |

where:
$I_{OH}$ is the hydroxyl index expressed in mg KOH/g;
M.wt is the molecular weight determined from the following equation:

$$M.wt = 56100 \times f/I_{OH},$$

with f the functionality of the prepolymer with molecular weight 400, stated in Examples 1-6, where f = ;
GPC is the Mn (number average molecular weight) determined by molecular exclusion chromatography; Mw is the weight average molecular weight; and Disp (dispersion) is the homogeneity index corresponding to the Mw/Mn quotient.

The demonstration that the catalytic activity increased on using crown ethers in the production of DMC catalysts used in the synthesis of polyether polyols can be clearly seen in Figure 1, wherein the values of PO consumed against the time for the catalyst of Example 3, compared with the reference test corresponding to Example 6.

**Claims**

1. A double metal cyanide (DMC) catalyst with a partially crystalline structure with approximate parameters of Å$^3$ a= 12.17, b= 6.78, c=7.85, β= 97.1°, V=643 Å$^3$ that comprises:

   (1) one or more double metal cyanides;
   (2) one or more organic ligands;
   (3) water occluded in the partially crystalline part of the catalyst; and
   (4) one or more crown ether ligand,

   with the condition that the organic ligand (2) is not a crown ether ligand (4).

2. Catalyst according to claim 1, wherein said crown ether ligand is present in the DMC catalyst in a quantity between 1% and 30% by weight in relation to the total of the DMC catalyst.

3. Catalyst according to claim 1, wherein said crown ether ligand is selected from the group formed by benzo-15-crown-5, benzo-18-crown-6, 4-tert-butylbenzo-15-crown-5, 4-tert-butylcyclohexane-15-crown-5, 12-crown-4, 18-crown-6, cyclohexane-15-crown-5, dibenzo-18-crown-6, dibenzo-21-crown-7, dibenzo-24-crown-8, dibenzo-30-crown-10,4,4'(5')-ditert-butyldibenzo-18-crown-6, 4,4',(5')-ditert-butyldibenzo-24-crown-8, 4,4'(5')-ditert-butyldicyclohexane-18-crown-6, 2,3-naphtho-15-crown-5 and their mixtures.

4. Catalyst according to claim 1, wherein its most significant peaks in the X-ray diffraction profile are (in d-spacing, in Å): 3.76; 4.98 and 6.06 approximately.

5. A process to produce DMC catalyst according to any of claims 1 to 4, which comprises the following steps:

   a) pre-heating the mixture formed by the components (1), (2) and (3) at a temperature below 30° C.
   b) adding a solution of the component (4) to the mixture at the same temperature below 30° C.

6. A process to produce polyether polyols which comprises the addition of an alkylene oxide to an initiator which comprises active hydrogens in the presence of a DMC catalyst according to any of claims 1 to 4.

7. Use of a DMC catalyst according to any of claims 1 to 4, in the production of polyether polyols.

**Patentansprüche**

1. Ein Double Metal Cyanide (DMC) Katalysator mit einer teilweise kristallinen Struktur mit ungefähren Parametern von a= 12,17, b= 6,78, c= 7,85, β=97,1°, V= 643 Å$^3$, der Folgendes umfasst:

   (1) ein oder mehrere Double Metal Cyanide;
   (2) einen oder mehrere organische Liganden;
   (3) Wasser, das in dem teilweisen Kristallin-Teil des Katalysators verschlossen ist, und
   (4) einen oder mehrere Kronenether-Liganden,

   unter der Bedingung, dass der organische Ligand (2) kein Kronenether-Ligand (4) ist.

2. Katalysator nach Anspruch 1, wobei der besagte Kronenether-Ligand in dem DMC-Katalysator in einer Menge von zwischen 1 Gew.-% und 30 Gew.-% im Verhältnis zu der Gesamtheit des DMC-Katalysators vorhanden ist.

3. Katalysator nach Anspruch 1, wobei der besagte Kronenether-Ligand aus der Gruppe ausgewählt ist, die besteht aus: Benzo-15-Krone-5, Benzo-18-Krone-6, 4-Tert-Butylbenzo-15-Krone-5, 4-Tert-Butylcyclohexan-15-Krone-5, 12-Krone-4, 18-Krone-6, Cyclohexan-15-Krone-5, Dibenzo-18-Krone-6, Dibenzo-21-Krone-7, Dibenzo-24-Krone-8, Dibenzo-30-Krone-10,4,4' (5')-Ditert-Butyldibenzo-18-Krone-6, 4,4', (5')-Ditert-Butyldibenzo-24-Krone-8, 4,4'4 (5')-Ditert-Butyldicyclohexan-18-Krone-6, 2,3-Naphto-15-Krone-5 und deren Gemische.

4. Katalysator nach Anspruch 1, wobei dessen bedeutendsten Höchstwerte in dem Röntgenbild-Difraktionsprofil die Folgenden sind (im D-Abstand, in Å): 3,76; 4,98 und 6,06; ungefähr.

**5.** Ein Verfahren zur Herstellung des DMC-Katalysators nach einem der Ansprüche 1 bis 4, das die folgenden Schritte umfasst:

a) Vorwärmen der Gemische, die aus den Komponenten (1), (2) und (3) bestehen, bei einer Temperatur von unter 30° C.
b) Zugabe einer Lösung der Komponente (4) zu dem Gemisch bei derselben Temperatur unter 30° C.

**6.** Ein Verfahren zur Herstellung von Polyetherpolyolen, das die Zugabe von Alkylenoxid zu einem Initiator umfasst, der aktive Hydrogene umfasst, in dem Vorhandensein eine DMC-Katalysators nach einem der Ansprüche 1 bis 4.

**7.** Die Verwendung eines DMC-Katalysators nach einem der Ansprüche 1 bis 4, bei der Herstellung von Polyetherpolyolen.

## Revendications

**1.** Un catalyseur de cyanure de métal double (DMC) avec une structure partiellement cristalline avec des paramètres approximatifs de
a= 12,17, b= 6,78, c= 7,85, β=97,1°, V= 643 Å qui comprend :

(1) un ou plusieurs cyanures de métal double ;
(2) un ou plusieurs coordinats organiques ;
(3) eau occluse dans la partie partiellement cristalline du catalyseur ; et
(4) un ou plusieurs coordinats d'éther couronne, à condition que le coordinat organique (2) ne soit pas un coordinat d'éther couronne (4).

**2.** Catalyseur selon la revendication 1, dans lequel ledit coordinat d'éther couronne est présent dans le catalyseur DMC dans une quantité entre 1% et 30% en poids par rapport au total du catalyseur DMC.

**3.** Catalyseur selon la revendication 1, dans lequel ledit coordinat d'éther couronne est choisi dans le groupe formé par benzo-15-couronne-5, benzo-18-couronne-6, 4-tert-butylbenzo-15-couronne-5, 4-tert-butylcyclohexane-15-couronne-5, 12-couronne-4, 18-couronne-6, cyclohexane-15-couronne-5, dibenzo-18-couronne-6, dibenzo-21-couronne-7, dibenzo-24-couronne-8, dibenzo-30-couronne-10, 4, 4' (5')-ditert-butyldibenzo-18-couronne-6, 4, 4', (5')-ditert-butyldibenzo-24-couronne-8, 4, 4' (5')-ditert-butyldicyclohexane-18-couronne-6, 2, 3-naphtho-15-couronne-5 et leurs mélanges.

**4.** Catalyseur selon la revendication 1, dans lequel ses pics les plus significatifs dans le profil de diffraction de rayons X sont (en écartement-d, en A) : 3.76, 4.98 et 6.06 approximativement.

**5.** Un procédé pour produire un catalyseur DMC selon quelconque des revendications 1 à 4, qui comprend les étapes suivantes :

a) préchauffer le mélange formé par les composants (1), (2) et (3) à une température en dessous de 30° C.
b) ajouter une solution du composant (4) au mélange à la même température en dessous de 30° C.

**6.** Un procédé pour produire des polyols polyéthers qui comprend l'ajout d'un alkylène-oxyde à un initiateur qui comprend des hydrogènes actifs en présence d'un catalyseur DMC selon quelconque des revendications 1 à 4.

**7.** Utilisation d'un catalyseur DMC selon quelconque des revendications 1 à 4, dans la production de polyols polyéthers.

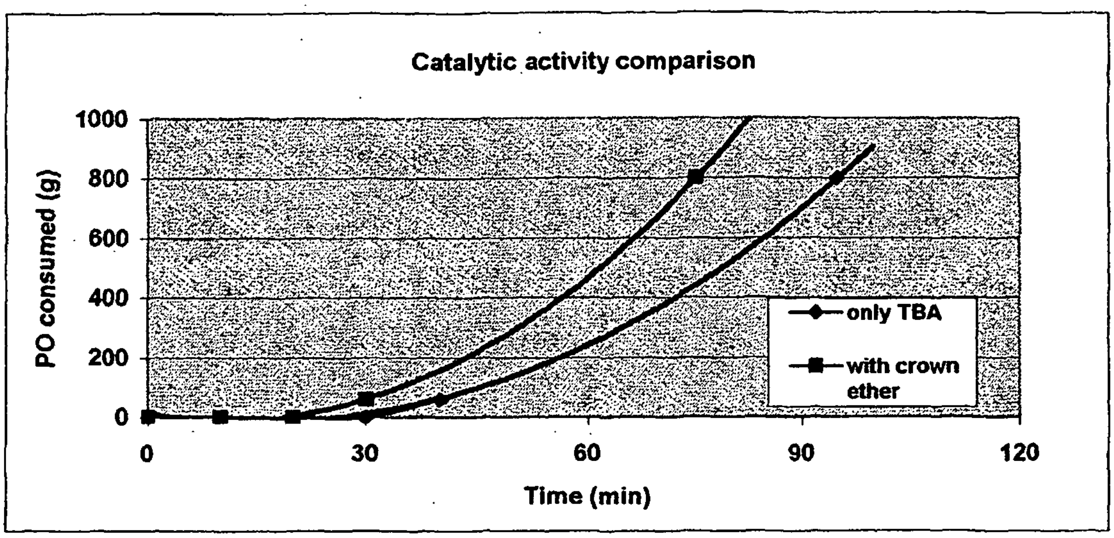
Catalytic activity comparison
PO consumed (g)
1000
800
600
400
200
0
0
30
60
90
120
Time (min)
only TBA
with crown ether

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3404109 A
- US 3941849 A
- US 4472560 A
- US 4477589 A
- JP 3002136 B
- EP 1288244 A
- US 5158922 A
- US 5482908 A
- US 5693584 A
- EP 700949 A
- WO 9740086 A
- WO 9816310 A
- WO 9919063 A
- US 5844070 A
- US 6204357 B
- US 5627120 A